(19) Europäisches Patentamt / European Patent Office / Office européen des brevets

(11) **EP 3 671 222 A1**

(12) **EUROPÄISCHE PATENTANMELDUNG**

(43) Veröffentlichungstag:
 **24.06.2020  Patentblatt 2020/26**

(21) Anmeldenummer: **18213468.4**

(22) Anmeldetag: **18.12.2018**

(51) Int Cl.:
 *G01P 3/487* (2006.01)      *G01P 13/04* (2006.01)
 *B61L 25/02* (2006.01)

(84) Benannte Vertragsstaaten:
 **AL AT BE BG CH CY CZ DE DK EE ES FI FR GB GR HR HU IE IS IT LI LT LU LV MC MK MT NL NO PL PT RO RS SE SI SK SM TR**
 Benannte Erstreckungsstaaten:
 **BA ME**
 Benannte Validierungsstaaten:
 **KH MA MD TN**

(71) Anmelder: **Baumer Electric AG**
 **8500 Frauenfeld (CH)**

(72) Erfinder:
 • **Hohl, Michael**
  **8405 Winterthur (CH)**
 • **Niedermann, Manuel**
  **9552 Bronschhofen/SG (CH)**

(74) Vertreter: **Strauss, Steffen**
 **Baumer Innotec AG**
 **Hummelstrasse 17**
 **Group Intellectual Property**
 **8501 Frauenfeld (CH)**

(54) **DREHGEBERVORRICHTUNG MIT ZWEI DETEKTOREINHEITEN AUF GEMEINSAMEM TRÄGER**

(57)   Vorgeschlagen wird eine stabil arbeitende Drehgebervorrichtung (100) zur Bestimmung von Drehzahlen bei Schienenfahrzeugen mit einer Maß-Verkörperung und mit einer ersten und einer zweiten Detektoreinheit (1, 2) zur sensorischen Erfassung der Drehbewegung, welche dazu ausgebildet sind, unabhängig voneinander die Drehzahl zu bestimmen und jeweils wenigstens einen Magnetowiderstandssensor (4, 5, 6, 7) umfassen, um ein sich periodisch änderndes Magnetfeld der sich drehenden Maß-Verkörperung, die wenigstens ein Magnetfeld erzeugendes Element aufweist, zu erfassen, wobei die erste und zweite Detektoreinheit (1, 2) eine vorgegebene Mess-Ausrichtung (R) aufweisen, wobei die erste und zweite Detektoreinheit (1, 2) oder die Magnetowiderstandsensoren (4, 5, 6, 7) auf einem gemeinsamen Träger (T) angeordnet und galvanisch voneinander getrennt sind, sodass eine Spannungsfestigkeit und gleichzeitig ein vorbestimmter Phasenversatz der Signale der Detektoreinheiten (1, 2) einstellbar sind.

Fig. 1

**Beschreibung**

Die Erfindung betrifft eine Drehgebervorrichtung zur Bestimmung von Drehzahlen bei Schienenfahrzeugen.

Aus dem Stand der Technik sind im Bereich der Schienenfahrzeugtechnik verschiedene Drehgebersysteme bekannt. Zum einen sind magnetische Drehgeber erhältlich, welche mit Magnetowiderständen, zum Beispiel in Form von AMR-Sensoren (AMR: anisotroper Magnetowiderstandseffekt) arbeiten. Bei diesen Drehgebern wird beispielsweise ein mehrpoliger Magnet als aktive Maß-Verkörperung eingesetzt. Darüber hinaus sind auch magnetische Drehgeber mit passiver Maß-Verkörperung im Stand der Technik verfügbar, bei denen als Rotor Zahnräder aus magnetisch leitfähigem Material verwendet werden. Die eigentliche Messung erfolgt bei diesem Drehgeber mit passiver Maß-Verkörperung über Hall-Sensoren, die sich im Magnetfeld vorgespannter Permanentmagnete befinden. Bei der Rotation des Zahnrades ändert sich somit das Magnetfeld, dem der Hall-Sensor ausgesetzt ist, sodass über diese periodischen Änderungen die Drehzahl bestimmt werden kann. Darüber hinaus sind aus dem Stand der Technik auch optische Drehgeber bekannt, bei denen Lichtschranken so angeordnet sind, dass sie durch die Zähne eines rotierenden Zahnrades unterbrochen und geöffnet werden und entsprechend die Frequenz bestimmt werden kann.

Die Aufgabe der Erfindung besteht darin, für den Schienenbetrieb eine stabil arbeitende und zuverlässig ausführbare Drehgebervorrichtung zur Erhöhung der Sicherheit bereitstellen zu können.

Die Aufgabe wird, ausgehend von einer Drehgebervorrichtung der eingangs genannten Art, durch die Merkmale des Anspruchs 1 gelöst.

Durch die in den abhängigen Ansprüchen genannten Maßnahmen sind vorteilhafte Ausführungen und Weiterbildungen der Erfindung möglich.

Die erfindungsgemäße Drehgebervorrichtung dient zur Bestimmung von Drehzahlen bei Schienenfahrzeugen. Sie umfasst eine Maß-Verkörperung, welche an einem Rotor, dessen Drehzahl zu bestimmen ist, angebracht werden kann. Die Maß-Verkörperung ist somit mechanisch an die Drehbewegung des Rotors gekoppelt und dreht sich mit diesem mit; bei starrer Kopplung mit der gleichen Frequenz wie der Rotor. Die Drehbewegung der Maß-Verkörperung entspricht somit hinsichtlich der Drehzahl und insbesondere der Richtung, der Drehbewegung des Rotors. Grundsätzlich ist es zwar denkbar, dass die Drehbewegung auch unmittelbar am Rotor selbst gemessen wird. Je nach System ist dies aber nicht immer vorteilhaft, sodass zu diesem Zweck die Maß-Verkörperung eingesetzt wird, beispielsweise dann, wenn an der Maß-Verkörperung Permanentmagnete angebracht werden und diese am zu vermessenden Rotor nicht ohne Weiteres zu befestigen sind.

Darüber hinaus sind eine erste und eine zweite Detektoreinheit zur sensorischen Erfassung der Drehbewegung vorgesehen. Messdaten wie Drehzahl oder Drehrichtung sind bei Schienenfahrzeugen unter anderem an verschiedene Sicherungssysteme weiterzuleiten, beispielsweise an die Zugsicherung und an das Bremssystem. Aus Sicherheitsgründen müssen diese Messungen grundsätzlich unabhängig und rückwirkungsfrei voneinander erfolgen und funktionieren. Aus diesem Grunde wird in der Regel auch zur Bestimmung der Drehzahl bei einem Schienenfahrzeug mehr als eine Detektoreinheit benötigt, denn aus Sicherheitsgründen wird es im Allgemeinen als nicht ausreichend angesehen, das Messergebnis einer Detektoreinheit einfach an zwei verschiedene Sicherheitssysteme weiterzuleiten. Somit sind erfindungsgemäß die erste und zweite Detektoreinheit dazu ausgebildet, unabhängig voneinander die Drehzahl zu bestimmen.

Im vorliegenden Fall arbeiten die erste und zweite Detektoreinheit jeweils mit wenigstens einem Magnetowiderstandssensor, d.h. ein Ohm'scher Widerstand ändert sich in Abhängigkeit eines äußeren Magnetfeldes. Die verwendete Maß-Verkörperung erzeugt bei ihrer Drehbewegung ein sich periodisch änderndes Magnetfeld. Zu diesem Zweck umfasst die Maß-Verkörperung wenigstens ein Element, das ein Magnetfeld erzeugt, wie z.B. einen Permanentmagneten. Die erste und zweite Detektoreinheit können in Bezug auf die Maß-Verkörperung so ausgerichtet werden, dass ein möglichst starkes Messsignal erzeugt wird. Sie besitzen somit eine vorgegebene Mess-Ausrichtung, welche z.B. bei der Auswertung zu berücksichtigen ist, weil sie den Winkel des Magnetfelds zu den Magnetowiderständen angibt, also unmittelbar die Beziehung zwischen Widerstand und Magnetfeld beschreibt.

Für die Drehgebervorrichtung können in vorteilhafter Weise AMR-Sensoren eingesetzt werden. Diese beruhen darauf, dass in ferromagnetischen Materialien, in Abhängigkeit von deren Magnetisierung bzw. Magnetisierungsrichtung, Elektronen eines elektrischen Stromflusses unterschiedlich gestreut werden und somit auch ein anderer Ohm'scher Widerstand des Materials je nach äußerem Magnetfeld festgestellt werden kann. Der Effekt wird daher als anisotroper Magnetowiderstandseffekt bezeichnet.. Vorzugsweise werden Messbrücken in Form von Wheatstone-Brücken eingesetzt, bei denen als Widerstände innerhalb der Brückenschaltung entsprechende Magnetowiderstände verwendet werden, die in einer fest vorgegebenen Position angeordnet wurden, sodass in Abhängigkeit der Änderung des äußeren Magnetfeldes der zu messende Widerstand sich ändert, also Rückschlüsse auf das äußere Magnetfeld zulässt.

Insbesondere zeichnet sich die erfindungsgemäße Drehgebervorrichtung dadurch aus, dass die erste und zweite Detektoreinheit bzw. die Magnetowiderstandssensoren der ersten und zweiten Detektoreinheit auf einem gemeinsamen Träger angeordnet und galvanisch und räumlich voneinander getrennt sind, sodass eine elektrische Leitung zwischen beiden Detektoreinheiten vermieden wird und eine Spannungsfestigkeit zwischen der ersten und zweiten Detektoreinheit vorliegt.

Gleichzeitig kann bei der Fertigung der Drehgebervorrichtung ein bestimmter Phasenversatz der Signale der ersten und zweiten Detektoreinheit eingestellt werden.

Eine galvanische Trennung erweist sich als vorteilhaft, um insbesondere im Falle auftretender Spannungsspitzen, die durchaus im Kilovoltbereich liegen können, keinen Ausfall beider Detektoreinheiten zu riskieren. Bei elektrisch betriebenen Schienenfahrzeugen koppeln und entkoppeln diese an bzw. von Leitungen des Schienennetzes, d.h. es werden also Schaltvorgänge bei Spannungen bis zu mehreren Kilovolt durchgeführt. Es kommt gegebenenfalls zu Überschlägen und sichtbaren Funkenstrecken. Eine Spannungsfestigkeit im Bereich von 500 VAC bis zu 2500 VAC wird somit regelmäßig gefordert (VAC: Spannungsangabe in Volt bei Vorliegen einer Wechselspannung).

Die Anbringung auf einem gemeinsamen Träger besitzt wiederum den Vorteil, dass nicht nur ein kompaktes Sensorbauteil zur Verfügung steht, sondern auch durch die auf dem gemeinsamen Träger vorgegebene Anordnung die beiden Detektoreinheiten bzw. die entsprechenden Magnetowiderstandssensoren in definierter Position und mit vorgegebenem, wohldefiniertem Abstand zueinander positioniert werden können. Die Erfindung macht sich diese Eigenschaft zunutze, indem sie die jeweiligen Detektoreinheiten bzw. die jeweiligen Magnetowiderstandssensoren auf dem Träger so anordnet und den Träger so zur Maß-Verkörperung positioniert, dass die jeweiligen Detektoreinheiten bzw. Magnetowiderstandssensoren zu unterschiedlichen Zeitpunkten von den Elementen der Maß-Verkörperung, die ein Magnetfeld erzeugen, passiert werden. Damit ergibt sich zwischen den Messergebnissen der jeweiligen Detektoreinheiten eine feste Phasenverschiebung. Indem der entsprechende Abstand genau gewählt und realisiert wird, kann der Phasenversatz somit bei der Fertigung des Trägers bzw. der Drehgebervorrichtung präzise je nach Kundenwunsch ohne größeren Aufwand in vorteilhafter Weise eingestellt werden.

Die erfindungsgemäße Drehgebervorrichtung besitzt gegenüber einer herkömmlichen Drehgebervorrichtung mit unterschiedlichen, baulich getrennten Detektoreinheiten den Vorteil, dass die Genauigkeit des Phasenversatzes nicht von der Genauigkeit beim Einbau der separaten Detektoreinheiten und deren Positionierung relativ zur Maß-Verkörperung abhängt.

Ferner stellt die Anordnung auf einem gemeinsamen Träger mit galvanischer Trennung bereits einen wesentlichen Unterschied zu Vorrichtungen aus dem Stand der Technik dar, welche mehrere Messkanäle zur Verfügung stellen bzw. mittels verschiedener Messbrücken arbeiten. Diese werden mitunter überlappend in die gleiche Schaltungsanordnung implementiert, sodass sich aus der Position keinerlei Phasenversatz ergibt. Zwangsweise liegt jedoch auch durch Implementierung innerhalb der gleichen Schaltung keine galvanische Trennung und somit auch keine oder eine nur geringe Spannungsfestigkeit vor. Denkbar ist grundsätzlich auch der Einsatz von Detektoreinheiten, bei denen zwei oder mehr Messbrücken vorhanden und nebeneinander angeordnet sind. Im Falle einer galvanischen Trennung als Grundbedingung kann bei einer solchen Detektoreinheit auch nur eine der Messbrücken verwendet werden, wenn die weitere(n) nicht galvanisch von dieser getrennt sind.

Die Erfindung ermöglicht es also, besonders beständig arbeitende Drehgebervorrichtungen bereitzustellen, deren Detektoreinheiten zueinander einen wohl definierten Phasenversatz aufweisen. Zudem wird eine besonders zuverlässige und beständige Ausführung zur Verfügung gestellt, die ein hohes Maß an Ausfallsicherheit gewährleistet. Somit eignet sich die erfindungsgemäße Drehgebervorrichtung insbesondere für den Einsatz bei Schienenfahrzeugen, bei denen oftmals widrige Messbedingungen herrschen und auch hohe Spannungsspitzen auftreten können.

In der Messtechnik hat sich grundsätzlich zur Vermessung Ohm'scher Widerstände der Einsatz von Messbrücken, insbesondere in Form von Wheatstone-Brücken bewährt. Auch im vorliegenden Fall können daher Magnetowiderstandssensoren mit insbesondere genau einer oder mit zwei Messbrücken verwendet werden, wobei vorzugsweise zwei der Messbrücken, von denen eine zur ersten oder eine zur zweiten Detektoreinheit gehört, um 45° zueinander angeordnet sein können. Die Messbrücken werden bei dieser Ausführungsform der Erfindung jedoch so angeordnet, dass sie galvanisch voneinander getrennt sind und beispielsweise einen Abstand aufweisen, der einen Spannungsüberschlag von einer Messbrücke auf die andere nicht zulässt. Die Messbrücken sind deshalb freilich auch elektrisch nicht miteinander verschaltet, da sie sonst ohnehin keine galvanische Trennung aufweisen würden.

Denkbar ist darüber hinaus auch, dass die Magnetowiderstandssensoren der ersten oder zweiten Detektoreinheit zueinander phasenverschoben sind, insbesondere um 0° oder um ein ganzzahliges Vielfaches von 45°. Hierdurch können, sofern notwendig, auch die Messsignale in definierter Weise zueinander in Beziehung gesetzt werden.

Bei einer besonders bevorzugten Weiterbildung der Erfindung ist der gemeinsame Träger als Platine ausgebildet. Dies ist zum einen im Hinblick auf die Fertigung von Vorteil, da die Elektronik bzw. Magnetoelektronik zunächst bei der Herstellung auch vergleichsweise einfach auf einer Platine angebracht werden kann. Darüber hinaus werden entsprechende Sensorplatinen auch ohne Weiteres mit hoher Präzision gefertigt, sodass diese Möglichkeit der genauen Fertigung im Zusammenhang mit dieser Weiterbildung der Erfindung auch in vorteilhafter Weise dazu genutzt werden kann, einen genau definierten Phasenversatz bereitstellen zu können. Denn der Phasenversatz resultiert unmittelbar aus dem Abstand der Detektoreinheiten bzw. der Magnetowiderstandssensoren. Insofern können bei der Fertigung der Drehgebervorrichtung auch Kostenvorteile erzielt werden, zumal kundenspezifisch jede beliebige Phasenverschiebung durch Auswahl und Einstellung der Distanz festgelegt wird.

Um die Sicherheit zu erhöhen und einen reibungslosen Betrieb gewährleisten zu können, kann der gemeinsame Träger einen Trennbereich zur Trennung der ersten und zweiten Detektoreinheit aufweisen, der insbesondere ausschließlich aus elektrisch isolierendem Material besteht, sodass zwischen erster und zweiter Detektoreinheit die Spannungsfestigkeit durch eine Variation der Breite des Trennbereichs eingestellt werden kann. Dadurch, dass keine elektrisch leitenden Bereiche in dieser Zone vorgesehen sind, kann ein Überschlag über diesen Trennbereich hinweg vermieden werden. Darüber hinaus ist der Trennbereich wiederum aus fertigungstechnischer Sicht einfach und kostengünstig herzustellen, indem die Platine in diesem Bereich eine Kontaktierung aufweist und unbeschichtet bleibt bzw. hinsichtlich des aufgebrachten Leitermaterials entschichtet wird.

Der Phasenversatz kann, wie bereits oben dargestellt, dadurch eingestellt werden, dass die erste und zweite Detektoreinheit auf dem gemeinsamen Träger nebeneinander so angeordnet werden, dass sie nacheinander von den ein magnetfelderzeugenden Elementen der Maß-Verkörperung passiert werden. Die Position der jeweiligen Detektoreinheit bestimmt somit den Phasenversatz. Bewegt sich ein Element, dass ein Magnetfeld erzeugt und an der Maß-Verkörperung angebracht ist, relativ zu einer Detektoreinheit, so wird diese Magnetfeldänderung vom Magnetowiderstandssensor erfasst, da dieses sich ändernde äußere Magnetfeld dessen Widerstand verändert. Sind zwei Detektoreinheiten in einem bestimmten Abstand zueinander angeordnet, so erzeugt das Element der Maß-Verkörperung, dass ein Magnetfeld hervorruft, ein Messsignal in beiden Detektoreinheiten, jedoch zeitlich versetzt zueinander, wobei der Versatz bzw. der Phasenversatz sich auf den Abstand der Detektoreinheiten und der Geschwindigkeit der Maß-Verkörperung ergibt. In vorteilhafter Weise ist der Phasenversatz somit baulich wohldefiniert festgelegt.

Um das Maß an Sicherheit noch einmal steigern zu können, können die erste und zweite Detektoreinheit jeweils eine fest verdrahtete Elektronikeinheit zur softwarelosen Aufbereitung der vom jeweiligen Magnetowiderstandssensor stammenden Signale aufweisen. Bei einer solchen fest verdrahteten Elektronikeinheit kann es sich um eine Elektronikschaltung handeln, die beispielsweise mit einem Mikrocontroller arbeitet, der in fest vorgegebener Weise programmiert wurde und bei dem keine weitere Software zur Ausführung von Befehlen verwendet wird. Denkbar ist grundsätzlich auch die Verwendung eines festprogrammierten FPGA zur Auswertung. Um die entsprechende Ausführungsvariante möglichst sicher und im Betrieb stabil arbeitend auszubilden, kann diese auch als einfache fest verdrahtete Schaltung realisiert sein. Software-typische Probleme, Inkompatibilität verschiedener Software-Versionen eines Programms oder dergleichen können daher vermieden werden, sodass eine sicherheitsrelevante Drehgebervorrichtung bereitgestellt werden kann, die zuverlässig und stabil arbeitet.

Zur Auswertung der Signale der jeweiligen Detektoreinheiten können also sogenannte Elektronikeinheiten vorgesehen sein. Auch diese können auf dem gemeinsamen Träger angeordnet sein und dabei galvanisch voneinander getrennt bleiben. Zu diesem Zweck können beide Elektronikeinheiten insbesondere durch den Trennbereich voneinander getrennt werden, sodass auch hier das Risiko von Überschlägen in gleicher Weise minimiert wird. Um ein möglichst starkes Messsignal zu erhalten, können die erste und zweite Detektoreinheit etwa so angeordnet sein, dass deren vorgegebene Mess-Ausrichtung senkrecht zur Bahnkurve der Maß-Verkörperung bei der Drehbewegung steht.

Insbesondere können bei einer Ausführungsvariante der Erfindung die erste bzw. zweite Detektoreinheit und/oder die Magnetowiderstandssensoren der jeweiligen Detektoreinheiten entlang der Bahnkurve der Maß-Verkörperung bei der Drehbewegung angeordnet werden, sodass unmittelbar auch der Phasenversatz von dieser Positionierung abhängt. Die Detektoreinheiten können auf der Platine unmittelbar nebeneinander angeordnet sein und somit auf der Bahnkurve nebeneinanderliegende Positionen einnehmen.

AUSFÜHRUNGSBEISPIELE

Ausführungsbeispiele der Erfindung sind in den Zeichnungen dargestellt und werden nachstehend unter Angabe weiterer Einzelheiten und Vorteile näher erläutert. Im Einzelnen zeigen:

Fig. 1: eine schematische Darstellung eines gemeinsamen Trägers einer Drehgebervorrichtung gemäß der Erfindung (mit zwei Messbrücken pro Detektoreinheit),

Fig. 2: eine schematische Darstellung eines gemeinsamen Trägers einer Drehgebervorrichtung gemäß der Erfindung (mit einer Messbrücke pro Detektoreinheit),

Fig. 3: die Schaltung einer Messbrücke,

Fig. 4, 5: eine Darstellung einer Drehgebervorrichtung gemäß der Erfindung, sowie

Fig. 6: eine Darstellung einer Drehgebervorrichtung gemäß der Erfindung, bei der die Detektoreinheiten bogenförmig um die Maß-Verkörperung herum angeordnet sind.

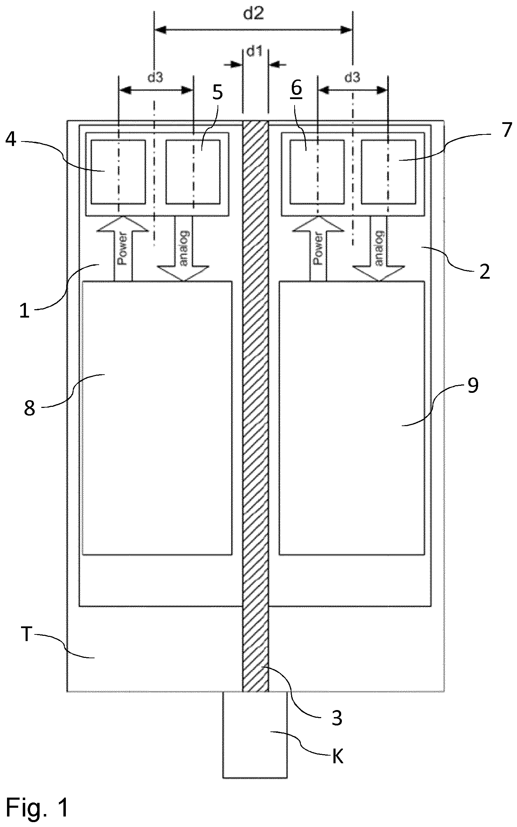

Figur 1 zeigt eine schematische Darstellung eines Trägers T für eine Drehgebervorrichtung zur Bestimmung von Drehzahlen bei Schienenfahrzeugen. Auf diesem gemeinsamen Träger T sind eine erste Detektoreinheit 1 und eine zweite Detektoreinheit 2 angeordnet, die der sensorischen Erfassung der Drehbewegung dienen. Beide Detektoreinheiten 1, 2 bestimmen unabhängig voneinander die Drehzahl und sind entsprechend auch baulich voneinander getrennt, sodass sie an unterschiedlichen Orten entlang der Bahnkurve einer Maß-Verkörperung liegen. Über den gesamten gemeinsamen Träger T hinweg verläuft ein Trennbereich 3, welcher der galvanischen Trennung der beiden Detektoreinheiten 1, 2 dient und frei von elektrischen Leitern ist. Darüber hinaus umfassen die Detektoreinheiten 1, 2 im vorliegenden Fall jeweils zwei Magnetowiderstandssensoren 4, 5 und 6, 7, die auf dem gemeinsamen Träger T in einer Richtung quer zum Trennbereich 3 in der Zeichnung gemäß Figur 1 nebeneinander angeordnet sind. Die Magnetowiderstandssensoren 4, 5 sind von den Magnetowiderstandssensoren 6, 7 galvanisch getrennt. Zur Signalaufbereitung ist jeweils pro Detektoreinheit 1, 2 eine Elektronikeinheit 8, 9 vorgesehen. Auch diese Elektronikeinheiten 8, 9 sind jeweils durch den Trennbereich 3 voneinander getrennt. Unbeeinflusst bleibt die galvanische Trennung davon, dass die elektrische Anbindung an die Elektronikeinheiten 8, 9 über ein gemeinsames Kabel K (mehradrig, wobei die Adern gegeneinander geschirmt sind) erfolgt.

Die Detektoreinheiten 1, 2 liefern jeweils ihre Messergebnisse unabhängig voneinander an unterschiedliche Sicherungssysteme, beispielsweise die Zugsicherung und das Bremssystem. Die Entfernung der Mitten der Detektoreinheiten 1, 2 beträgt den Abstand d2. Die minimale Entfernung zwischen den Detektoreinheiten 1, 2 ist durch die Breite d1 des Trennbereichs 3 vorgegeben. Die Magnetowiderstandssensoren 4, 5 und 6, 7, die jeweils eine Wheatstone-Messbrücke aufweisen, besitzen zueinander (innerhalb jeder Detektoreinheit 1, 2) den Abstand d3.

Im vorliegenden Ausführungsbeispiel nach Figur 1 werden Detektoreinheiten 1, 2 mit jeweils zwei Magnetowiderstandssensoren bzw. Messbrücken 4, 5, 6, 7 eingesetzt. Aufgrund der erfindungsgemäßen Maßgabe, galvanisch getrennte Detektoreinheiten 1, 2 zu verwenden, können Messergebnisse an die jeweiligen Sicherungssysteme wie die Zugsicherung oder das Bremssystem sicher erhalten und übermittelt werden. Die Magnetowiderstandssensoren 4, 5 und auch die Magnetowiderstandssensoren 6, 7 gewährleisten aufgrund ihrer vergleichsweise geringen Entfernung keine galvanische Trennung.

Es besteht grundsätzlich die Möglichkeit, auch nur jeweils einen dieser Sensoren bzw. eine dieser Messbrücken tatsächlich zu verwenden. Denkbar ist auch, jeweils Paare der unterschiedlichen Detektoreinheiten 1, 2 einzusetzen oder durch einen Abgleich der Magnetowiderstandssensoren einer Detektoreinheit 1 oder 2 die Messgenauigkeit zu verbessern.

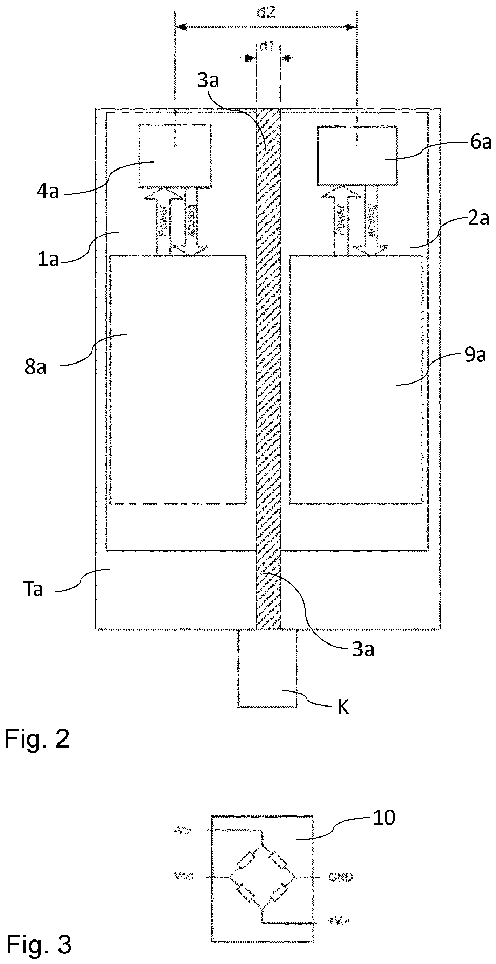

Figur 2 zeigt einen gemeinsamen Träger Ta mit Detektoreinheiten 1a, 2a mit nur jeweils einem Magnetowiderstandssensor 4a, 6a. Ansonsten sind auch Elektronikeinheiten 8a, 9a zur Auswertung und ein Trennbereich 3a zur Trennung der Detektoreinheiten 1a, 2a analog zu Figur 1 vorgesehen.

Beispielsweise kann über eine Breite d1 des Trennbereichs von etwa 1 mm eine Spannungsfestigkeit von 700 VAC, bei einem Abstand d1 von 2,25 mm bereits eine Spannungsfestigkeit von 1500 VAC erreicht werden, und zwar auch dann, wenn die Schaltungsteile nicht speziell isoliert werden.

Wie in Figur 1 dargestellt ist, ergeben sich beispielsweise folgende Abstände d2 für den Phasenversatz von 90°, wobei der Abstand zwischen zwei aufeinanderfolgenden, Magnetfeld erzeugenden Elementen auf der Maß-Verkörperung als Pitch bezeichnet wird:

$$d2 \begin{aligned} &= 0{,}25 \times Pitch + N \times Pitch \\ &= 0{,}50 \times Pitch + N \times Pitch \\ &= 0{,}75 \times Pitch + N \times Pitch \\ &= 1{,}00 \times Pitch + N \times Pitch \end{aligned}$$

,

mit N: natürliche Zahl größer oder gleich Null.

Durch diese fest vorgegebene Zuordnungs- bzw. Berechnungsvorschrift des Phasenversatzes wird insbesondere ermöglicht, dass keinerlei Software zur Auswertung benötigt wird und Software-typische Fehler somit vermieden werden können.

Figur 3 zeigt eine typische Anordnung einer Messbrücke 10, wobei eine Spannung zwischen den Anschlüssen -V01 und +V01 angelegt wird und ein Spannungsabgriff zwischen Erde GND und dem Punkt VCC erfolgt, der als Brücke innerhalb der Anordnung aus vier (Magneto-) Widerständen ausgebildet ist. Es wird wenigstens ein Magnetowiderstand verwendet, dessen Widerstandswert aus der abgegriffenen Spannung und der bekannten angelegten Spannung bestimmt wird und somit ein Rückschluss auf das Magnetfeld gezogen werden kann. Die Brücke 10 besitzt sodann auf einem Träger T eine feste Position, sodass auch die Mess-Ausrichtung zur Maß-Verkörperung durch den Einbau fest vorgegeben ist.

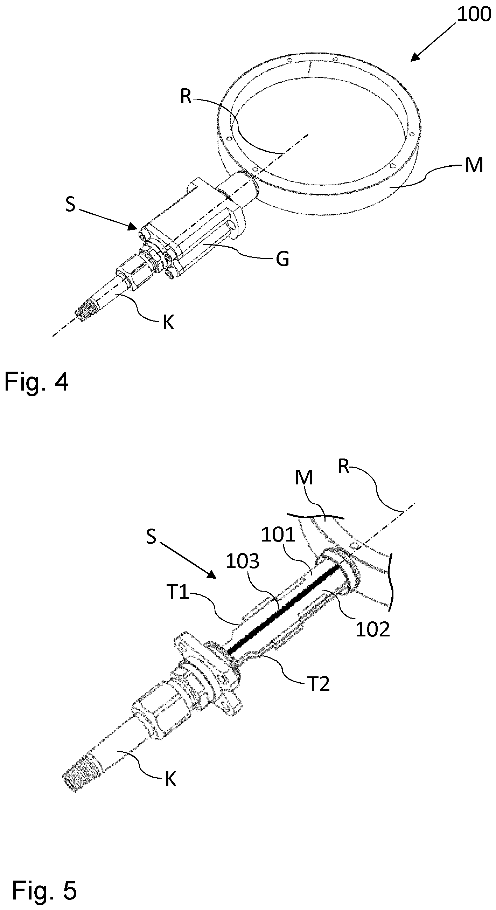

Figur 4 zeigt eine gesamte Drehgebervorrichtung 100 mit einer Maß-Verkörperung M und einem Sensor S, welcher ohne das Gehäuse G in Figur 5 dargestellt ist. Der Sensor S umfasst die Trägerplatinen T1 und T2, die jeweils wiederum zwei Detektoreinheiten 101 und 102 umfassen. Auf jedem Träger T1 und T2 sind diese Detektoreinheiten 101, 102 über einen Trennbereich 103 galvanisch voneinander getrennt. Die galvanische Trennung wird nicht dadurch beeinflusst, dass die entsprechenden Detektoreinheiten 101 und 102 bzw. die Detektoreinheiten der jeweiligen Träger T1 und T2 über ein gemeinsames Kabel K weitergeleitet werden. Die Detektoreinheiten 101, 102 bzw. der Sensor S besitzen eine Messausrichtung R, die senkrecht auf der Oberfläche der Maß-Verkörperung M steht.

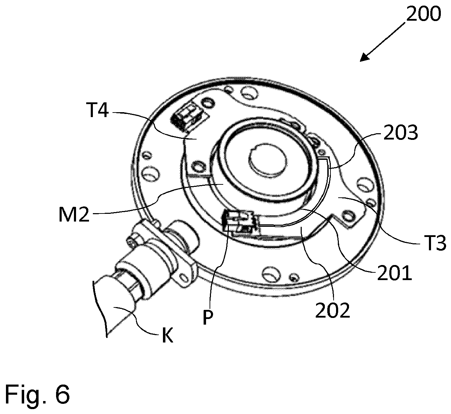

In Figur 6 ist eine weitere Anordnung einer Drehgebervorrichtung 200 mit einer aktiven Maß-Verkörperung M2 dargestellt, wobei die Trägerplatinen T3 und T4 zum Teil ringförmig um die Maß-Verkörperung M2 angeordnet sind. Darauf angeordnet sind auch jeweils die Detektoreinheiten 201, 202, welche jeweils durch einen Trennbereich 203 voneinander getrennt sind. Der Trennbereich läuft zum Teil parallel auf einem Kreisbogen zur Außenrand der Maß-Verkörperung M2 und mündet an einer Stelle schließlich senkrecht auf die Maß-Verkörperung M2 zu, wobei an diesem Ende auch die Magnetowiderstandssensoren angeordnet sind. Am anderen Ende ist ein Stecker P vorgesehen, über den die Stromversorgung erfolgen kann bzw. über den die Messsignale weitergeleitet werden können.

Insbesondere zeichnen sich alle erfindungsgemäßen Drehgebervorrichtungen bzw. deren Ausführungsbeispiele dadurch aus, das die erste und zweite Detektoreinheit bzw. die Magnetowiderstandssensoren der jeweiligen Detektoreinheiten auf einen gemeinsamen Träger angeordnet und galvanisch voneinander getrennt sind, sodass eine Spannungsfestigkeit zwischen erster und zweiter Detektoreinheit und gleichzeitig ein vorbestimmter Phasenversatz der Signale der ersten und zweiten Detektoreinheit einstellbar sind.


**Patentansprüche**

1. Drehgebervorrichtung (100, 200) zur Bestimmung von Drehzahlen bei Schienenfahrzeugen, mit einer Maß-Verkörperung (M, M2), die an einem Rotor, dessen Drehzahl zu bestimmen ist, anbringbar ist und mit einer ersten und einer zweiten Detektoreinheit (1, 2, 1a, 2a, 101, 102, 201, 202) zur sensorischen Erfassung der Drehbewegung, wobei die erste und die zweite Detektoreinheit (1, 2, 1a, 2a, 101, 102, 201, 202) dazu ausgebildet sind, unabhängig voneinander die Drehzahl zu bestimmen, wobei die erste und zweite Detektoreinheit (1, 2, 1a, 2a, 101, 102, 201, 202) jeweils wenigstens einen Magnetowiderstandssensor (4, 5, 6, 7, 4a, 6a) umfassen, bei dem ein ohmscher Widerstand in Abhängigkeit von einem äußeren Magnetfeld veränderbar ausgebildet ist, um ein sich periodisch änderndes Magnetfeld der sich drehenden Maß-Verkörperung (M, M2), die wenigstens ein Magnetfeld erzeugendes Element aufweist, zu erfassen, wobei die erste und zweite Detektoreinheit (1, 2 , 1a, 2a, 101, 102, 201, 202) eine vorgegebene Mess-Ausrichtung (R) aufweisen, wobei die erste und zweite Detektoreinheit (1, 2, 1a, 2a, 101, 102, 201, 202) oder die Magnetowiderstandsensoren (4, 5, 6, 7, 4a, 6a) der ersten und zweiten Detektoreinheit (1, 2 , 1a, 2a, 101, 102, 201, 202) auf einem gemeinsamen Träger (T, T1, T2, T3, T4) angeordnet und galvanisch voneinander getrennt sind, sodass eine Spannungsfestigkeit zwischen der ersten und zweiten Detektoreinheit (1, 2, 1a, 2a, 101, 102, 201, 202) und gleichzeitig ein vorbestimmter Phasenversatz der Signale der ersten und zweiten Detektoreinheit (1, 2 , 1a, 2a, 101, 102, 201, 202) einstellbar sind.

2. Drehgebervorrichtung (100, 200) nach Anspruch 1, **dadurch gekennzeichnet, dass** die Magnetowiderstandssensoren (4, 5, 6, 7, 4a, 6a) jeweils wenigstens eine, insbesondere genau eine oder zwei Messbrücken (10) umfassen, die als Wheatstone-Brücken mit wenigstens einem Magnetowiderstand ausgebildet sind, wobei vorzugsweise zwei der Messbrücken der ersten oder der zweiten Detektoreinheit (1, 2, 1a, 2a, 101, 102, 201, 202) um 45° zueinander angeordnet sind.

3. Drehgebervorrichtung (100, 200) nach einem der vorgenannten Ansprüche, **dadurch gekennzeichnet, dass** der Magnetowiderstandssensor oder einer der Magnetowiderstandssensoren (4, 5, 6, 7, 4a, 6a) der ersten gegenüber der zweiten Detektoreinheit (1, 2, 1a, 2a, 101, 102, 201, 202) zueinander phasenverschoben ist/sind, insbesondere um 0° oder einem ganzzahligen Vielfachen von 45°.

4. Drehgebervorrichtung (100, 200) nach einem der vorgenannten Ansprüche, **dadurch gekennzeichnet, dass** der gemeinsame Träger (T, T1, T2, T3, T4) als Platine ausgebildet ist.

5. Drehgebervorrichtung (100, 200) nach einem der vorgenannten Ansprüche, **dadurch gekennzeichnet, dass** der gemeinsame Träger (T, T1, T2, T3, T4) einen Trennbereich (3, 3a, 103, 203) zur Trennung der ersten und der zweiten Detektoreinheit (1, 2, 1a, 2a, 101, 102, 201, 202) aufweist, der insbesondere ausschließlich aus elektrisch isolierendem Material besteht, sodass zwischen der ersten und zweiten Detektoreinheit (1, 2, 1a, 2a, 101, 102, 201, 202) durch eine Variation des Trennbereichs (3, 3a, 103, 203), insbesondere der räumlichen Ausdehnung des Trennbereichs, die Spannungsfestigkeit einstellbar ist.

6. Drehgebervorrichtung (100, 200) nach einem der vorgenannten Ansprüche, **dadurch gekennzeichnet, dass** die erste und/oder die zweite Detektoreinheit (1, 2, 1a, 2a, 101, 102, 201, 202) auf dem gemeinsamen Träger (T, T1, T2, T3, T4) nebeneinander so angeordnet sind, dass sie nacheinander von den Magnetfeld erzeugenden Elementen der Maß-Verkörperung (M, M2) passierbar sind.

7. Drehgebervorrichtung (100, 200) nach einem der vorgenannten Ansprüche, **dadurch gekennzeichnet, dass** die erste und/oder die zweite Detektoreinheit (1, 2, 1a, 2a, 101, 102, 201, 202) jeweils eine fest verdrahtete Elektronikeinheit (8, 9, 8a, 9a) zur softwarelosen Aufbereitung der vom jeweiligen Magnetowiderstandssensor stammenden Signale aufweist.

8. Drehgebervorrichtung (100, 200) nach einem der vorgenannten Ansprüche, **dadurch gekennzeichnet, dass** die Elektronikeinheit (8, 9, 8a, 9a) der ersten und/oder zweiten Detektoreinheit (1, 2, 1a, 2a, 101, 102, 201, 202) auf dem gemeinsamen Träger (T, T1, T2, T3, T4) angeordnet ist, wobei die Elektronikeinheiten der ersten und zweiten Detektoreinheit (1, 2, 1a, 2a, 101, 102, 201, 202) jeweils durch den Trennbereich (3, 3a, 103, 203) voneinander getrennt sind.

9. Drehgebervorrichtung (100, 200) nach einem der vorgenannten Ansprüche, **dadurch gekennzeichnet, dass** die erste und/oder die zweite Detektoreinheit (1, 2, 1a, 2a, 101, 102, 201, 202) so angeordnet ist/sind, das deren vorgegebene Mess-Ausrichtung (R) senkrecht zur Bahnkurve der Maß-Verkörperung (M, M2) bei deren Drehbewegung steht.

10. Drehgebervorrichtung (100, 200) nach einem der vorgenannten Ansprüche, **dadurch gekennzeichnet, dass** die erste und/oder die zweite Detektoreinheit (1, 2, 1a, 2a, 101, 102, 201, 202) und/oder die Magnetowiderstandssensoren (4, 5, 6, 7, 4a, 6a) der ersten und zweiten Detektoreinheit (1, 2, 1a, 2a, 101, 102, 201, 202) entlang der Bahnkurve der Maß-Verkörperung (M, M2) bei deren Drehbewegung angeordnet sind, sodass insbesondere durch deren Abstand (d2) voneinander und/oder den Abstand der Messbrücken voneinander die jeweiligen Phasenverschiebungen zueinander abhängen.

Fig. 1

Fig. 2

Fig. 3

Fig. 4

Fig. 5

Fig. 6

Europäisches
Patentamt

European
Patent Office

Office européen
des brevets

# EUROPÄISCHER RECHERCHENBERICHT

**Nummer der Anmeldung**

EP 18 21 3468

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2016 206390 A1 (CONTINENTAL TEVES AG & CO OHG [DE]) 19. Oktober 2017 (2017-10-19) | 1-3,5-10 | INV. G01P3/487 G01P13/04 B61L25/02 |
| Y | * Absätze [0044], [0045], [0052] - [0055], [0062] - [0070], [0081] - [0084]; Abbildungen 1a,2b * | 1-10 | |
| | ----- | | |
| X | DE 10 2015 224255 A1 (CONTINENTAL TEVES AG & CO OHG [DE]) 8. Juni 2017 (2017-06-08) | 1,2,5-10 | |
| Y | * Absätze [0002] - [0020], [0030], [0031], [0061] - [0069], [0087]; Abbildungen 1,2,8 * | 1-10 | |
| | ----- | | |
| Y | DE 10 2007 029819 A1 (INFINEON TECHNOLOGIES AG [DE]) 2. Januar 2009 (2009-01-02) * Absätze [0132] - [0140]; Abbildungen 1,2,4,5,11 * | 1-10 | |
| | ----- | | **RECHERCHIERTE SACHGEBIETE (IPC)** |
| Y | Unknown: "Spannungsfestigkeit & Isolationswiderstand für Leiterplatten", , 18. März 2009 (2009-03-18), Seiten 1-3, XP055592444, Gefunden im Internet: URL:https://www.electronicprint.eu/files/rund%20um%20die%20leiterplatte/spannungsfestigkeit.pdf [gefunden am 2019-05-28] * Seite 1 - Seite 2 * | 5,8 | G01P B61L |
| | ----- | | |

Der vorliegende Recherchenbericht wurde für alle Patentansprüche erstellt

| Recherchenort | Abschlußdatum der Recherche | Prüfer |
|---|---|---|
| München | 28. Mai 2019 | Felicetti, Christoph |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 21 3468

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-05-2019

| Im Recherchenbericht angeführtes Patentdokument | Datum der Veröffentlichung | Mitglied(er) der Patentfamilie | Datum der Veröffentlichung |
|---|---|---|---|
| DE 102016206390 A1 | 19-10-2017 | DE 102016206390 A1<br>WO 2017178216 A1 | 19-10-2017<br>19-10-2017 |
| DE 102015224255 A1 | 08-06-2017 | KEINE | |
| DE 102007029819 A1 | 02-01-2009 | KEINE | |

Für nähere Einzelheiten zu diesem Anhang : siehe Amtsblatt des Europäischen Patentamts, Nr.12/82

EPO FORM P0461